# EUROPEAN PATENT SPECIFICATION

(11) **EP 1 595 695 B1**
(45) Date of publication and mention of the grant of the patent: **19.03.2014**
(21) Application number: 05076900.9
(22) Date of filing: 26.07.2002
(51) Int. Cl.: B29D 35/14, A43B 5/16

(54) **Skate boot**
Schlittschuh
Bottine de patin

(43) Date of publication of application: 16.11.2005
(62) Divisional of application: 02291901.3
(73) Proprietor: Bauer Hockey Corp., St-Jérôme, QC J7Y 5G2 (CA)
(72) Inventor: Labonte, Ivan, Montréal, Quebec H2G 2C4 (CA); Langevin, Chris, Prévost, Quebec J0R 1P0 (CA)
(74) Representative: Cabinet Plasseraud

(56) References cited:
- EP-A- 1 016 353
- EP-A- 1 149 541
- DE-U- 9 400 085
- FR-A- 2 741 542
- US-A- 4 783 911

## Description

### Field of the invention

The invention relates to a lasted skate boot for ice skates or in-line roller skates and more particularly to a lasted skate boot comprising an upper having a thermoformed outer shell and an inner lining mounted inside the outer shell.

### Background of the invention

Typical skate boots are fabricated by assembling together previously die-cut pieces of textile material and shaping them over a last. Various pieces of textiles or fabrics are cut to specific patterns, which are then pre-assembled by stitching or gluing or both into a multi-layer construction. The rigidity and flexibility characteristics of the skate boot are defined by the various layers of materials being positioned and layered in specific regions of the pre-assembled component of the skate boot. The accumulation of pieces of material into layers and the mechanical properties of each piece of textile or fabric material define the overall dynamic behavior of the skate boot. Usually, the pre-assembled component further includes rigid components generally made of plastic to increase the rigidity of specific area of the skate boot. The pre-assembled boot generally consists of the back and sides of the skate boot and a toe cap and tongue assembly. The pre-assembled boot has the general configuration of the finished product but has not yet been shaped to the final form of the skate boot.

The pre-assembled component is positioned over a last and formed to obtain the shape of the desired finished product. A last is a three-dimensional shape of the inside cavity of a boot. The pre-assembled boot may be mounted upside down onto the last for ease of manipulation and assembly of the remaining components making up the skate boot.

An insole is placed on the top part of the upside down last and the pre-assembled boot is stretched over the last and over the insole in order for the pre-assembled boot to conform to the specific shape of the last. The stretched material is then glued and nailed or tacked to the insole to maintain the desired shape.

Once the upper part of the skate boot is completed, a rigid outsole is secured to the insole of the boot to complete the skate boot. An ice skate blade holder or an in-line roller chassis is finally mounted to the bottom of the boot to complete the skate.

This type of process is extensively used in the shoemaking industry. It generates a good product but has some disadvantages. For instance, the number of parts involved in the multi-layer construction can be staggering; a conventional ice skate for hockey may have up to eighty parts to be assembled and shaped over the last. As a consequence, the manufacturing process is lengthy and complex.

European Patent Application 1,149,541 discloses a skate boot with an upper having lateral and medial quarter panels made of foam material. Each quarter panel is made of a pre-cut sheet of foam placed in the mold and thermo-pressured such that the panel comprises an inner surface shaped to substantially conform to the side of the foot.

There is a need in the industry for a skate boot made of fewer components than the traditionally made skate boot and which is lighter than the traditionally made skate boot.

There is also a need for a skate boot, which provides flexibility and durability as well as optimal performance.

### Summary of the Invention

The invention seeks to provide a method of making a lasted skate boot as defined in claim 1.

### Brief description of the drawings

A detailed description of the embodiments of the present invention is provided herein below, by way of example only, with preference to the accompanying drawings, in which:
Figure 1 is a perspective view illustrating a male-female mold for forming an outer shell according to the invention;
Figure 2 is a perspective view illustrating a second male-female mold for forming the outer shell;
Figure 3 is a perspective view illustrating a third male-female mold for forming the outer shell;
Figure 4 is a perspective view illustrating a fourth male-female mold for forming the outer shell;
Figure 5 is a rear elevational view of the outer shell shown in an unfolded position;
Figure 6 is a cross-sectional view of the outer shell taken at line 6-6 of Figure 5;
Figure 7 is a perspective view of the outer shell shown in a folded position;
Figure 8 is a cross-sectional view of the outer shell taken at line 8-8 of Figure 7;
Figure 9 is a rear elevational view of the outer shell shown in a folded position;
Figure 10 is a perspective view of the outer shell shown in a folded position;
Figure 11 is an exploded perspective view illustrating an ice skate incorporating the outer shell constructed in accordance with the invention;
Figure 12 is a perspective view illustrating the upper constructed in accordance with the invention with a last and an insole;
Figure 13 is a perspective view of an ice skate incorporating the skate boot constructed in accordance with the invention;
Figure 14 is a perspective view of a human foot with the contour of the foot in stippled lines and the bones in plain lines; and
Figure 15 is a front elevational view of the foot of Figure 14.

In the drawings, embodiments of the invention are illustrated by way of examples. It is to be expressly understood that the description and drawings are only for the purpose of illustration and are an aid for understanding. They are not intended to be a definition of the limits of the invention.

### Detailed description of the embodiments

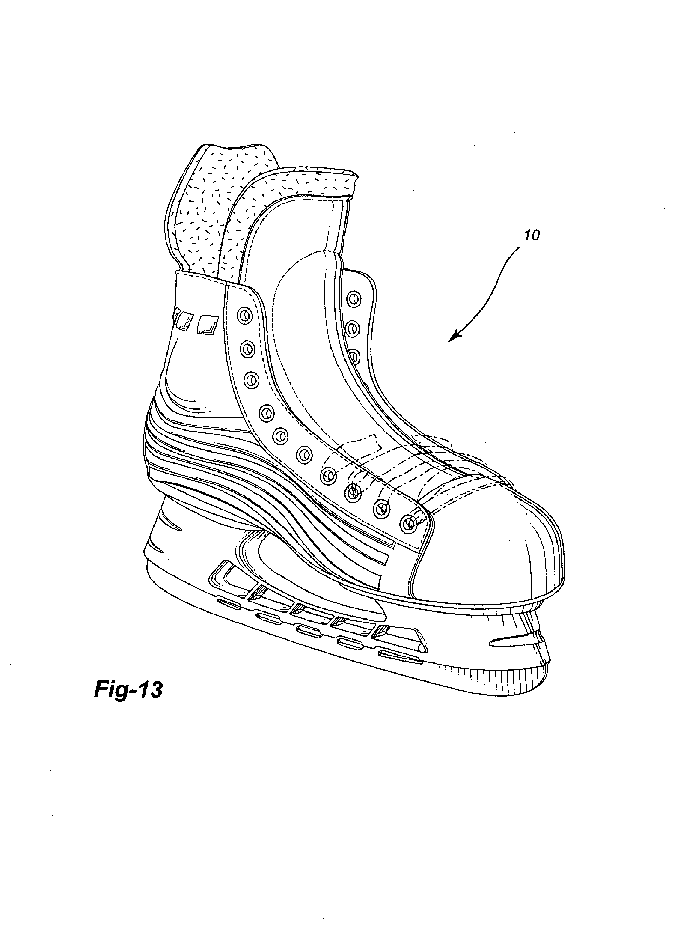

A skate boot manufactured in accordance with the present invention is illustrated generally by reference numeral 10 in Figure 13.

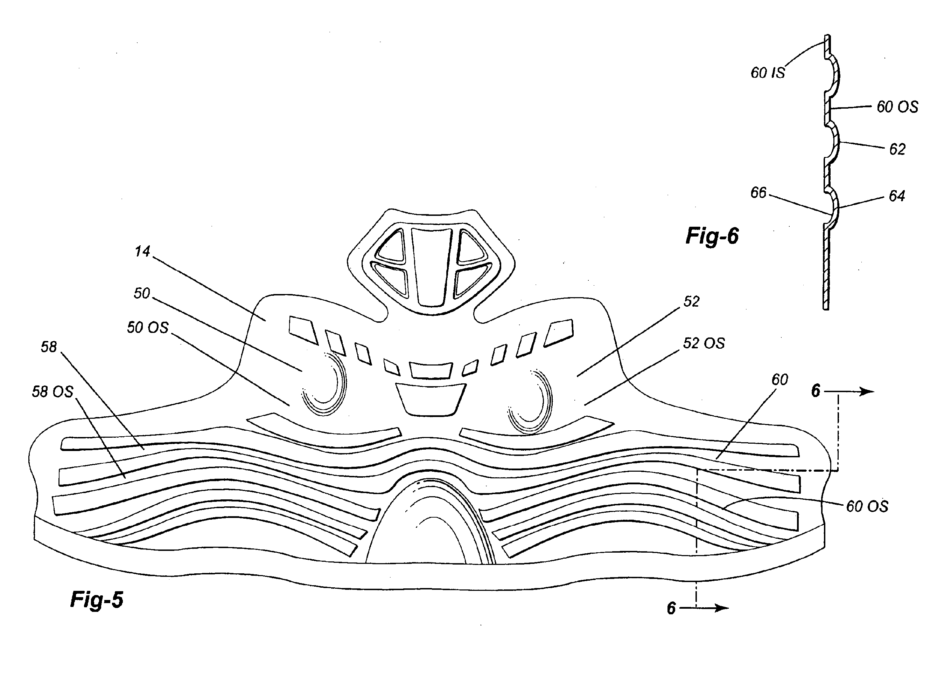

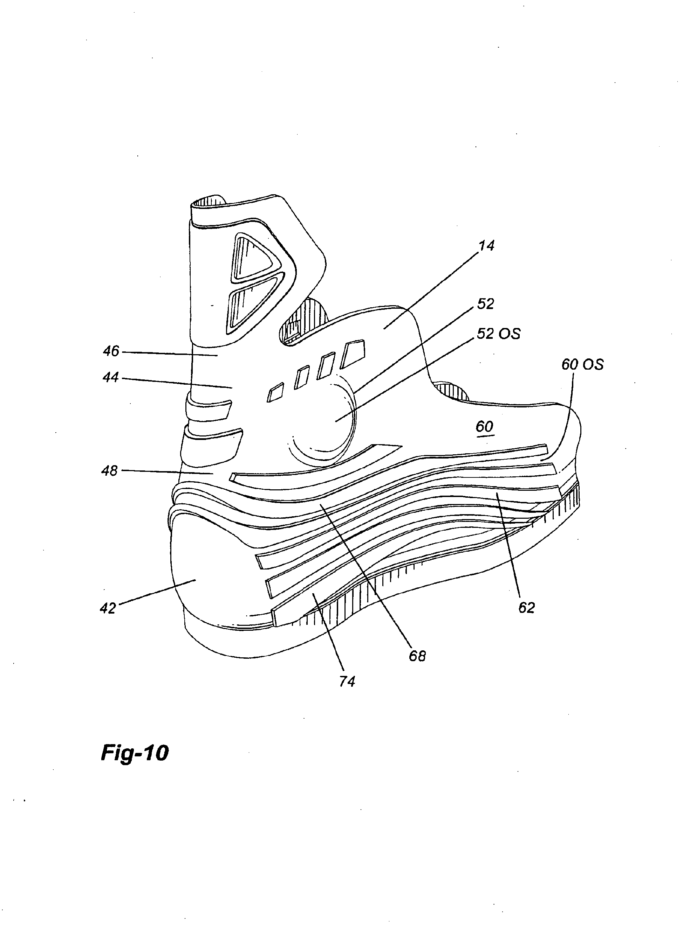

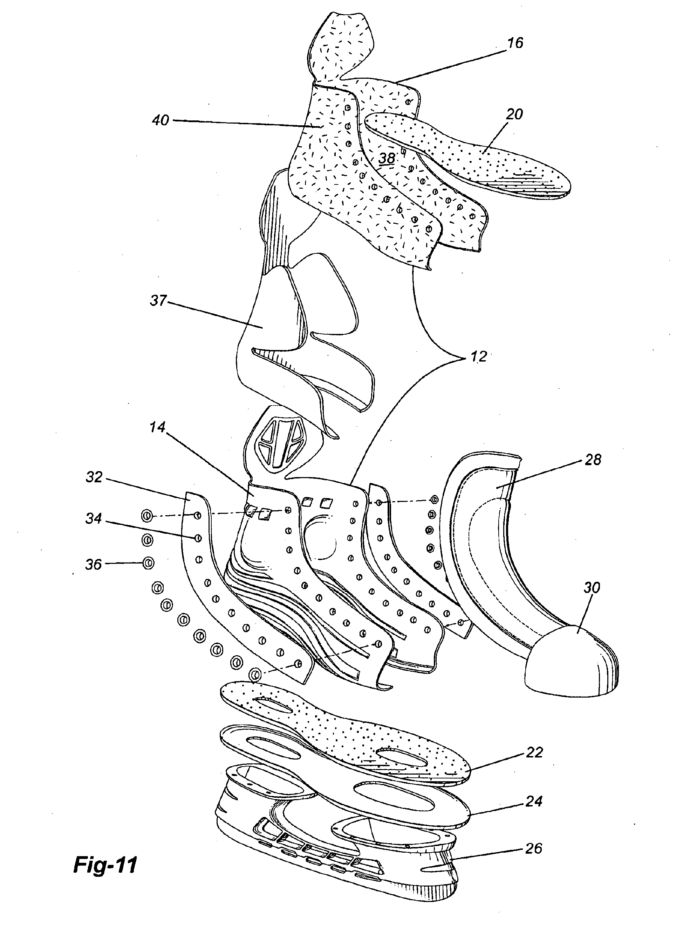

Referring to Figure 11, skate boot 10 comprises an upper 12 for enclosing a human foot. Upper 12 comprises an outer shell 14 and an inner lining 16 mounted inside outer shell 14. Outer shell 14 illustrated in Figures 5 to 11 is for use in a skate boot for a right foot.

Outer shell 14 is made by thermo-pressured molding of a suitable thermoforming synthetic material initially in uniform thickness sheet form such as a pre-cut sheet having a desired contour, the sheet being made of thermoforming materials such as those sold under the trade-mark MEGABIX® (a core of extruded SURLYN®, a backing of SONTARA® and a hot melt coating; thickness of 0.95 mm), FORMO500® (non woven polyester with a core of extruded polyolefinic, stiffening layers of synthetic latex on each side and an ethylene vinyl acetate hot melt adhesive on one side; thickness of 1.50 mm), BYLON® (a nylon multifilament with a backing of black saturated needle punched polyester nonwoven and a face coating of non-fray urethane) and MOSOCA® (NYLON® 66 with a core of SURLYN® and a PU coating).

Outer shell 14 can be made of a homogenous thermoforming synthetic material or can be made of layers of different thermoforming synthetic materials. For example, outer shell 14 may comprise two layers, the material of the outer layer of shell 14 being more rigid, or more resistant to abrasion, than the material of the inner layer of shell 14. More specifically, outer layer of shell 14 can be made of a pre-cut sheet of MOSOCA® and inner layer of shell 14 can be made of a pre-cut sheet of polystyrene, both sheets being thermoformed together. A pre-cut sheet of polyethylene or polyurethane may also be used for inner layer of shell 14. The outer and inner layers may be stitched together before or after the molding operation if desired.

Inner lining 16 is made of a soft material and has an inner surface 38 and an outer surface 40. Inner lining can be a fabric made of 100% nylon fibers. Inner surface 38 is intended to contact the skin of the foot in use. Outer surface 40 of inner lining 16 is secured to outer shell 14 by affixing means such as glue, stitches, nails, adhesives or tacks. It is understood that inner lining 16, being made of a soft material, is less rigid than outer shell 14 that is made of synthetic material being sufficiently rigid for supporting the foot.

Skate boot 10 also includes a footbed 20, an insole 22 facing the plantar surface of the foot and an outsole 24 secured to insole 22. Insole 22 is secured to outer shell 14 with a fastener such as stitches, glue, nails, adhesives or tacks. An ice skate blade holder 26 is secured to outsole 24. It is understood that an in-line roller chassis may also be secured to outsole 24. Insole 22 and outsole 24 have apertures for allowing access to a locking mechanism of the ice skate blade with ice skate blade holder 26 (not illustrated).

Skate boot 10 also comprises a tongue 28 and a toe box 30 facing the toes of the foot. Tongue 28 extends upwardly and rearwardly from toe box 30 and covers the upper front portions of the foot and the ankle. Preferably, toe box 30 and tongue 28 are pre-assembled prior to installing into outer shell 14. The frontal edge of tongue 28 is sewn directly to toe box 30, and then both sides of toe box 30 are secured to outer shell 14 with a fastener such as stitches, glue, nails, adhesives or tacks. Toe box 30 may also be glued, nailed or tacked to outer shell 14.

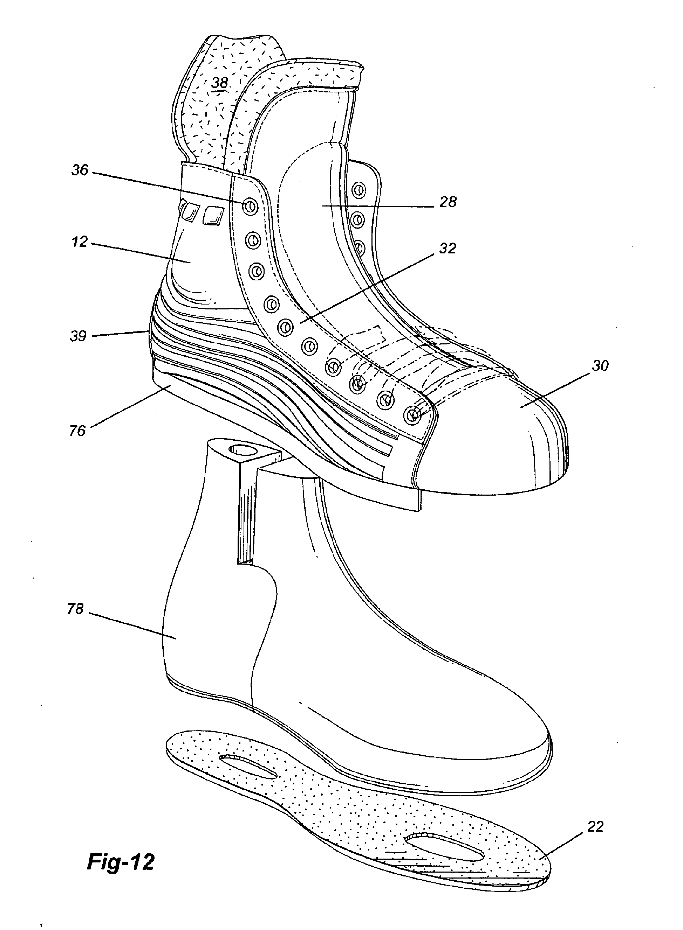

Skate boot 10 also comprises a band 32 secured to an upper portion of outer shell 14, band 32 being made of fabric, textile or leather and comprising apertures 34. Eyelets 36 are punched into band 32, outer shell 14 and inner lining 16 vis-a-vis apertures 34. It is understood that the skate boot may comprise lacing loops and/or eyelets 36. Skate boot 10 may comprise a rigid insert 37 that provides more rigidity in the ankle and heel portions of skate boot 10 and which is sandwiched between outer shell 14 and inner lining 16. Skate boot 10 may also comprise a protective overlay recovering a portion of upper 12 or a rear cover 39 secured to a rear portion of outer shell 14 (see Figure 12). Protective overlay and rear cover 39 may be made of fabric, textile or leather.

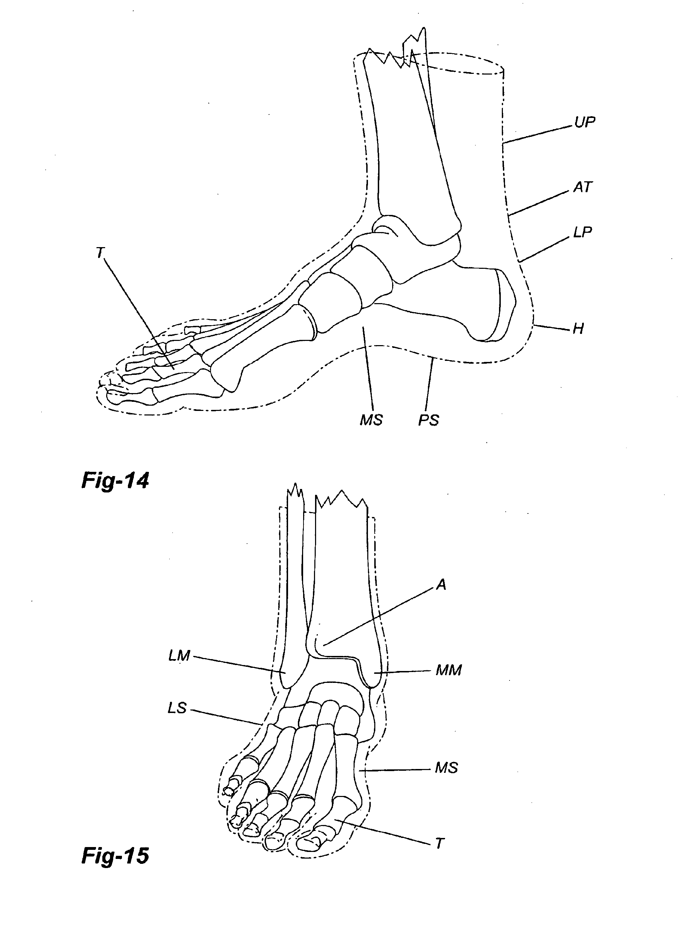

A typical human foot is shown in Figures 14 and 15. The human foot has a heel H, an Achilles tendon AT having an upper part UP and a lower part LP that projects outwardly with relation to upper part UP, lower part LP merging with heel H.

The foot also comprises a plantar surface PS, a medial side MS, a lateral side LS, toes T, and an ankle A with a medial malleolus MM and a lateral malleolus LM, lateral malleolus LM being below than medial malleolus MM.

Referring to Figures 5 to 10, outer shell 14 is formed of a heel counter 42 receiving heel H, an ankle portion 44 receiving ankle A and medial and lateral quarters 58, 60 receiving medial and lateral sides MS, LS of the foot respectively. Medial and lateral quarters 58, 60 extend forwardly from heel counter 42 and ankle portion 44. Medial quarter 58 comprises inner and outer surfaces 58IS and 58OS and lateral quarter 60 comprises inner and outer surfaces 60IS and 60OS.

Ankle portion 44 comprises an upper part 46 and a lower part 48 that projects outwardly with relation to upper part 46, lower part 48 merging with heel counter 42. Ankle portion 44 is formed for following the rear profile of Achilles tendon AT. More specifically, upper part 46 of ankle portion 44 follows upper part UP of Achilles tendon AT and lower part 48 of ankle portion 44 follows lower part LP of Achilles tendon AT. Heel counter 42 is substantially cup shaped for following the contour of heel H.

Ankle portion 44 also comprises medial and lateral sides 50, 52. Medial side 50 comprises inner and outer surfaces 50IS, 50OS and lateral side 52 comprises inner and outer surfaces 52IS, 52OS. Medial and lateral sides 50, 52 also comprise medial and lateral depressions 54, 56 respectively. Medial depression 54 receives medial malleolus MM and lateral depression 56 receives lateral malleolus LM, lateral depression 56 is located slightly below medial depression 54 for conforming to the morphology of the foot.

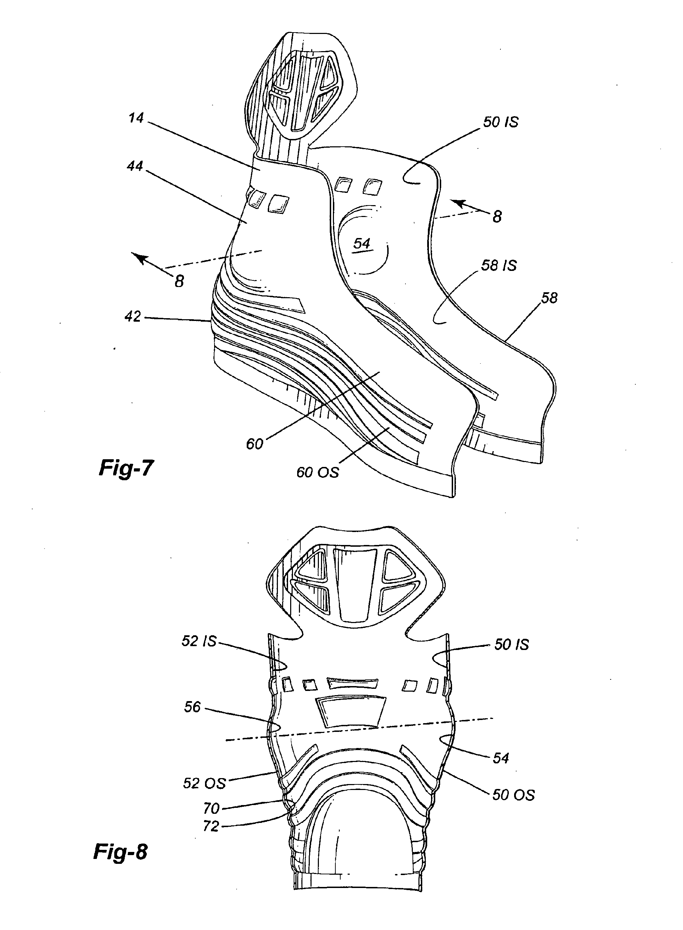

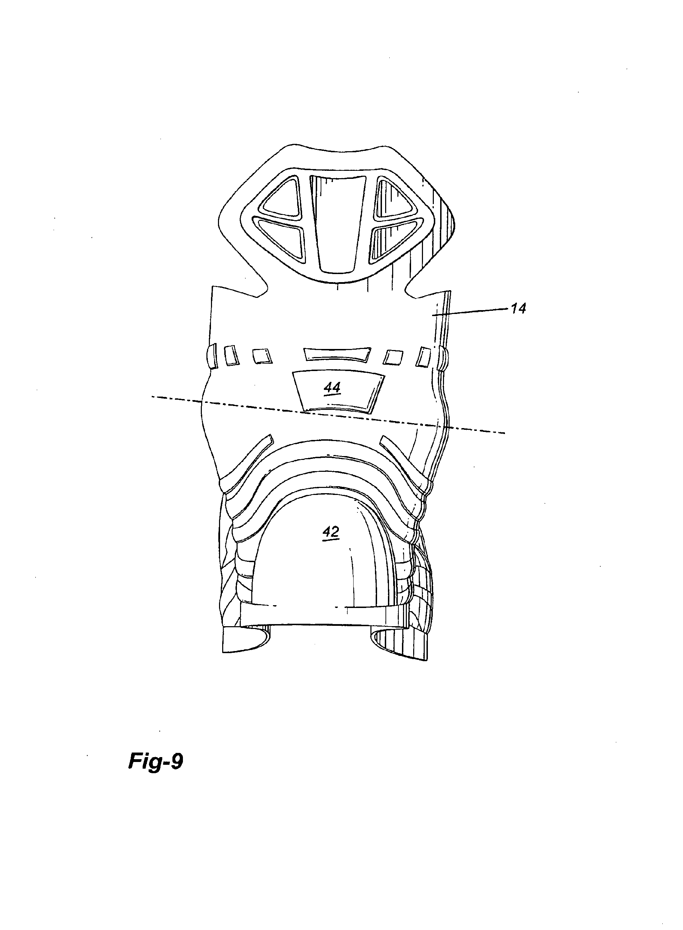

As shown more particularly in Figures 8 and 9, medial and lateral sides 50, 52 of ankle portion 44 and medial and lateral quarters 58, 60 are adapted to conform to the general morphology of the foot. In fact, inner surfaces 50IS, 52IS of ankle portion 44 an inner surfaces 58IS and 60IS of medial and lateral quarters 58, 60 follow the sides of heel H and ankle A, and medial and lateral sides MS, LS of the foot while accounting for statistical variations of the relative position of medial malleolus MM and the lateral malleolus LM.

Medial and lateral quarters 58, 60 comprise quarter reinforcing elements 62 and medial and lateral sides 50, 52 of ankle portion 44 comprise ankle reinforcing elements 68. Referring to Figure 6, quarter reinforcing element 62 comprises a ridge 64 formed on outer surface 60OS of lateral quarter 60 and a groove 66 registering with ridge 64, groove being formed on inner surface 60IS of lateral quarter 60. Referring to Figure 8, ankle reinforcing element 68 comprises a ridge 70 formed on outer surface 52OS of lateral side 52 of ankle portion 44 and a groove 72 registering with ridge 70, groove 66 being formed on inner surface 52IS of lateral side 52 of ankle portion.

Outer shell 14 illustrated in Figures 5 to 13 comprises quarter reinforcing elements 62 that continue with ankle reinforcing elements 68 for forming continuous elongated reinforcing elements on outer shell 14, these continuous elongated reinforcing elements being also formed on the rear portion of ankle portion 44. Outer shell 14 also comprises heel reinforcing elements 74 that are formed on heel counter 42, heel reinforcing elements 74 being continuous with quarter reinforcing elements 62 for forming continuous elongated reinforcing elements on the sides of outer shell 14.

As reinforcing elements 62 and 68, heel reinforcing elements 74 comprise a ridge formed on the outer surface of heel counter 42 and a groove registering with the ridge, the groove being formed on the interior surface of heel counter 42.

It is understood that quarter and ankle reinforcing elements 62, 68 and quarter and heel reinforcing elements 62, 74 may be separate or formed together and their design may be selected for obtaining the desired rigidity, stability and flexibility of skate boot 10. Reinforcing elements 62, 68 and 74 may or may not have the same width and height (or depth) but their pattern is identical for the following aspect: a ridge (or projection) formed on the outer or inner surface of outer shell 14 corresponds to a groove (or depression) that registers with the ridge, the groove being formed on the outer or inner surface of outer shell 14 (naturally, a ridge formed on the outer surface of outer shell 14 corresponds to a registered groove formed on the inner surface of outer shell 14).

It is also understood that the ridge of reinforcing elements 62, 68 and 74 may be formed on the interior surfaces of medial and lateral quarters 58, 60, ankle portion 44 and heel counter 42 respectively while the registered groove of reinforcing elements 62, 68 and 74 may be formed on the outer surfaces.

Reinforcing elements 62, 68 and 74 also protect the foot from impacts due to a puck, a ball or a stick since these elements tend to dissipate the impact energy.

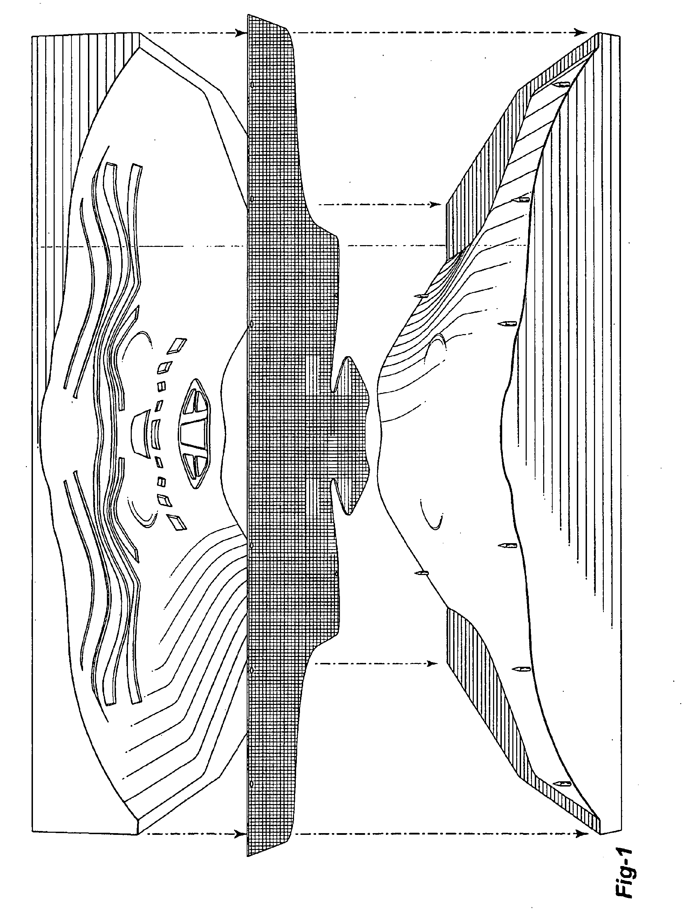

In order to manufacture outer shell 14, a pre-cut sheet of thermoformable synthetic material is inserted into the cavity of one of the male-female mold shown in Figures 1 to 4.

The male and female portions of the molds define the inner and outer surfaces of outer shell 14 respectively. For instance, the male portion of the molds defines inner surfaces 50IS, 52IS of ankle portion 44 and inner surfaces 58IS, 60IS of medial and lateral quarters 58, 60 whereas the female portion of the molds defines outer surfaces 50OS, 52OS of ankle portion 44 an outer surfaces 58OS, 60OS of medial and lateral quarters 58, 60.

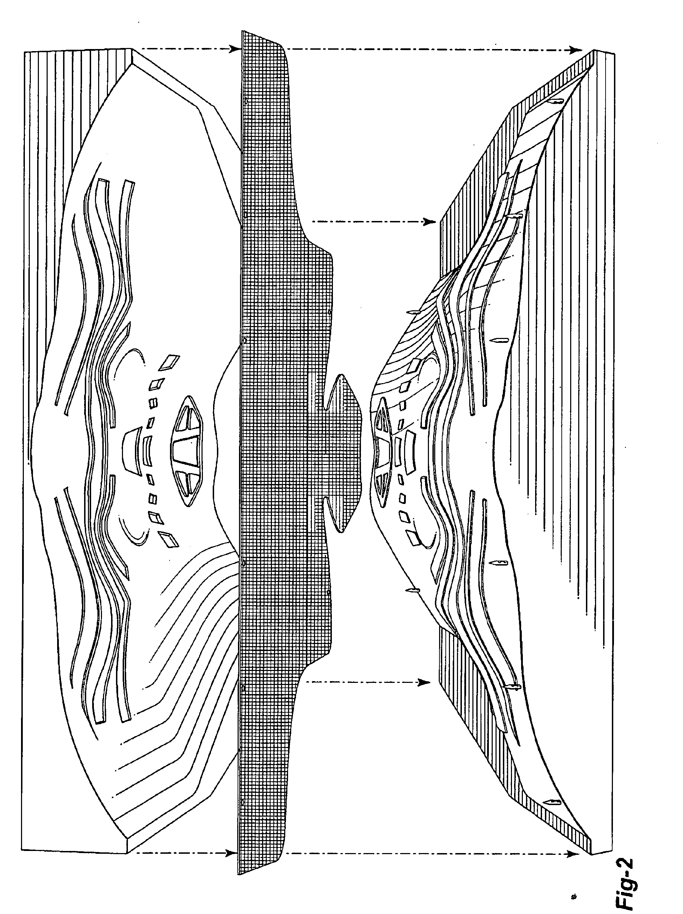

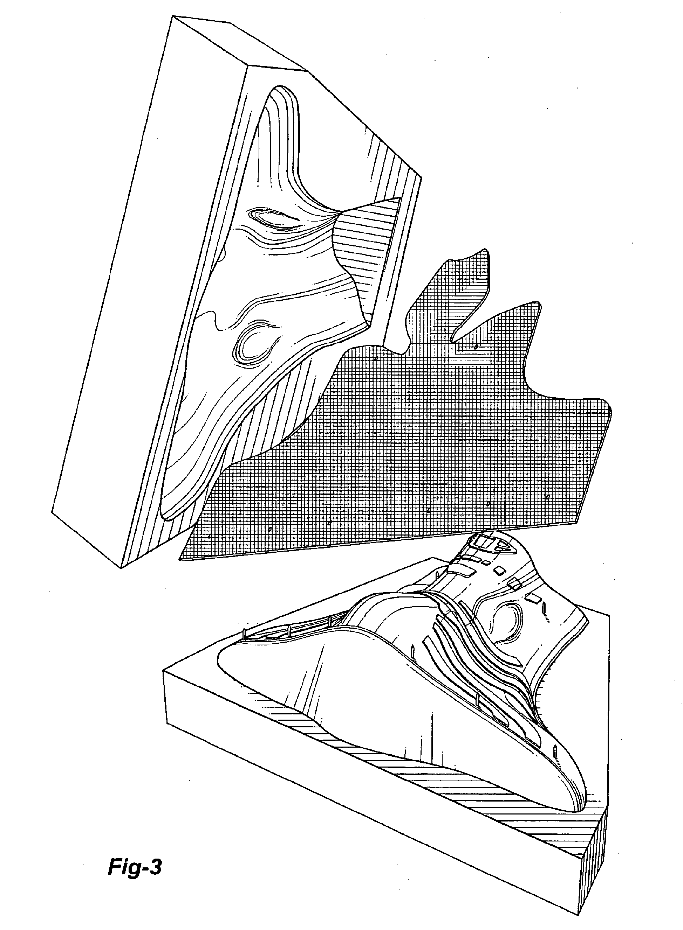

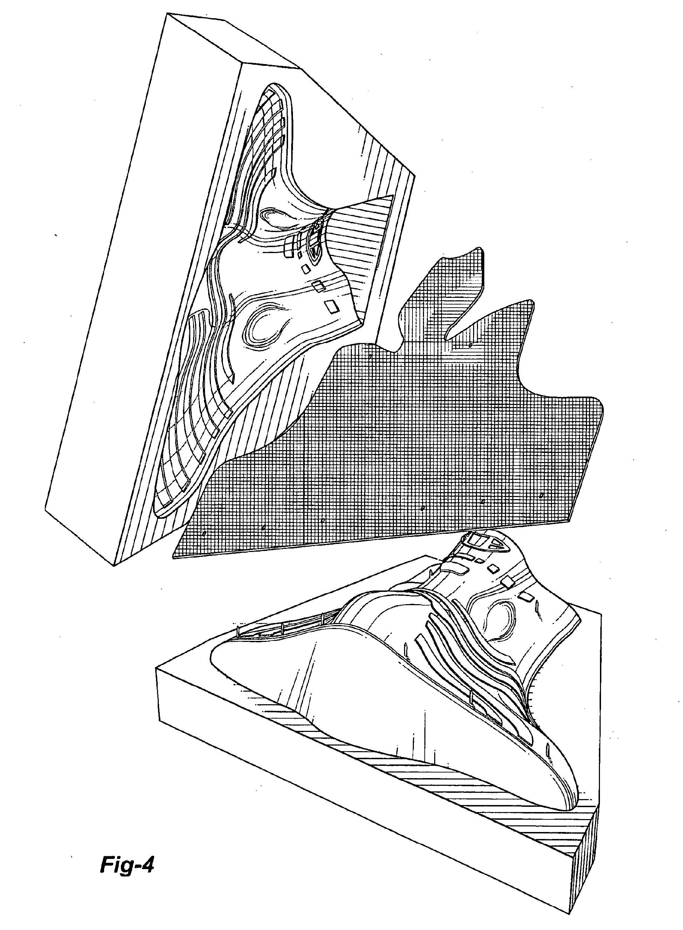

As seen in Figures 2 and 4, grooves and ridges are provided in the female and male portions of the molds while only grooves are provided in the female portion of the mold illustrated in Figure 1 and only ridges are provided on the male portion of the mold illustrated in Figure 3. Due to the presence of ridges in the male portions and grooves in the female portion, the deformation of the synthetic material is more important in the region of the reinforcing elements when using the molds illustrated in Figures 2 and 4. Moreover, the deformation of the synthetic material is less important when using the molds illustrated in Figures 1 and 2 than the molds illustrated in Figures 3 and 4 since the three-dimensional shape of the latter molds is more prominent than the one of the molds illustrated in Figures 1 and 2.

The pre-cut sheet is aligned and temporarily secured to one of the mold portions using any suitable means to accurately position the pre-cut sheet within the mold and maintain same in position when the mold is closed. Once the mold is closed over the pre-cut sheet, the mold is heated up to the thermoforming temperature of the pre-cut sheet and male and female portions are pressed against the pre-cut sheet.

As indicated above, the pre-cut sheet of outer shell 14 may be formed of layers of different thermoforming synthetic materials. It is understood that the pre-cut sheet of outer shell 14 can be molded with the pre-cut sheet of inner lining 16, instead of securing inner lining 16 to outer shell 14 after the molding operation of outer shell 14. Naturally, the material of inner lining 16 must be selected from materials that may sustain the thermoforming temperature of outer shell 14.

In an embodiment of the invention, heat and pressure are applied simultaneously for a period of 15 seconds to 2 minutes after which the mold is allowed to cool down so that the pre-cut sheet will set to the three-dimensional shape defined by the male and female portions of the mold. Preferably, heat and pressure are applied simultaneously for a period of 45 seconds to 1 minute. The applied heat is generally between 250°F (121°C) and 350°F (177°C), with the preferred temperature being approximately 325°F (163°C). The applied pressure is generally between 75 psi (517Kpa) and 150 psi (1034Kpa), with the preferred pressure being approximately 125 psi (862Kpa). It is understood that the amount of time, temperature and pressure may be different if a cooled mold is used.

By utilizing different grades of thermoformable synthetic material, different thermoformable synthetic materials or the same material with different density, the designers are able to vary the mechanical properties of outer shell 14. Similarly, by utilizing different patterns for reinforcing elements 62, 68 and 74 (i.e. location, number, width, height (or depth) and orientation), the designers are able to vary the mechanical properties of outer shell 14. In that sense, using different thermoformable synthetic materials and patterns of reinforcing elements 62, 68 and 74, the designers are thus able to vary the flexibility, rigidity and stability of skate boot 10.

Referring now to Figure 12, outer shell 14 also comprises a lower skirt portion 76 that is foldable to overlap a portion of insole 22. A last 78 is inserted into the inside cavity of upper 12. Last 78 enables upper 12 to maintain its shape when skirt portion 76 is folded to give upper 12 its final shape. Last 78 is inserted into upper 12 and insole 22 is positioned underneath last 78 inside skirt portion 76.

Once the assembly is completed, upper 12 is placed upside down into a lasting machine. Glue is first applied to the bottom surface of insole 22 along its periphery. Skirt portion 76 is then folded over last 78 onto the bottom surface of insole 22, using the lasting machine wipers. Once folded, skirt portion 76 is bonded to insole 22 by the glue that was previously laid on the bottom surface of insole 22. Skirt portion 76 is further nailed, stitched, or tacked all around insole 22 to provide the necessary mechanical grip to remove the pulling forces and allow the glue to properly set between skirt portion 76 and insole 22. Once skirt portion 76 is firmly attached to insole 22 and upper 12 has acquired its final shape, a light sanding of the folded skirt portion 76 is performed to partially even the lower surface of upper 12 and provide a flat surface on which outsole 24 can be glued or nailed.

The above description of embodiments should not be interpreted in a limiting manner since other variations, modifications and refinements are possible within the spirit and scope of the present invention. The scope of the invention is defined in the appended claims.

## Claims

1. A method of making a lasted skate boot (10) comprising an upper (12) for enclosing a human foot, the foot having a heel (H), an Achilles tendon (AT) having a rear upper part (UP) and a rear lower part (LP) that projects outwardly with relation to the upper part, the lower part merging with the heel, the foot also comprising an ankle (A) with a medial malleolus and a lateral malleolus (MM, LM), a plantar surface (PS), medial and lateral sides (MS, LS) and toes (T), said method comprising:
(a) providing a mold with a male portion and a female portion having a three-dimensional shape;
(b) aligning and temporarily securing to one of the portions of the mold a pre-cut sheet of thermoformable synthetic material;
(c) thermoforming said sheet of thermoformable synthetic material to form a one piece outer shell (14) having a three-dimensional shape corresponding to the three-dimensional shape of the male and female portions of the mold, said outer shell comprising (i) a heel counter (42) for receiving the heel of the foot; (ii) an ankle portion (44) for receiving the ankle; (iii) medial and lateral quarters (58, 60) for receiving the medial and lateral sides of the foot respectively, said medial and lateral quarters (58, 60) extending forwardly from said heel counter and said ankle portion, said medial and lateral quarters (58, 60) having respective inner surfaces (58IS, 60IS) and outer surfaces (58OS, 60OS); wherein said ankle portion (44) is thermoformed such that it comprises medial and lateral sides (50, 52) facing the medial malleolus and the lateral malleolus of the ankle, said medial and lateral sides (50, 52) having respective inner surfaces (50IS, 52IS) and outer surfaces (50OS, 52OS), a rear upper part (46) and a rear lower part (48), said rear lower part (48) merging with said heel counter (42), said rear upper part (46) being formed to follow the rear upper part (UP) of the Achilles tendon (AT) and said rear lower part (48) being formed to follow the rear lower part (LP) of the Achilles tendon (AT); and (iv) a lower skirt portion (76) for overlapping a portion of an insole (22);
(d) mounting an inner lining (16) inside said outer shell (14) to form an upper (12) comprising said inner lining (16) and said outer shell (14), said inner lining (16) being less rigid than said outer shell (14) and comprising a surface intended to face the heel, the ankle and the medial and lateral sides of the foot in use;
(e) folding said outer shell (14) at the rear for forming a cavity of the upper (12);
(f) inserting a last (78) into the cavity of the upper (12) and positioning said insole (22) underneath the last (78) and inside said lower skirt portion (76); and
(g) affixing said lower skirt portion (76) to said insole (22);
the method being **characterised in that** in step (a) the mold is provided with male and female portions each having a three-dimensional shape which is prominent and corresponds to the shape of the entire heel (H), Achilles tendon (AT) with rear upper part (UP) and rear lower part (LP), ankle (A) with medial and lateral malleolus (MM, LM) and medial and lateral sides (MS, LS) of the human foot, so that in step (e) said outer shell (14) is folded for forming the cavity of the upper (12) and in step (c) the sheet of thermoformable synthetic material is thermoformed for having the rear lower part (48) projecting outwardly with relation to said rear upper part (46).

2. A method as defined in claim 1, wherein said method comprises thermoforming said heel counter (42) such that it is substantially cup-shaped for following the contour of the heel of the foot.

3. A method as defined in claim 1 or 2, wherein said method comprises thermoforming said ankle portion (44) such that it comprises a lateral depression (56) for receiving the lateral malleolus and a medial depression (54) for receiving the medial malleolus.

4. A method as defined in any one of claims 1 to 3, wherein said method comprises thermoforming said ankle portion (44) such that it comprises a ridge (70) formed on its outer surface and a groove (72) registering with said ridge on the inner surface.

5. A method as defined in any one of claims 1 to 4, wherein said method comprises thermoforming said heel counter (42) such that it comprises a ridge formed on its outer surface and a groove registering with said ridge on the inner surface.

6. A method as defined in any one of claims 1 to 5, wherein said method comprises thermoforming said medial and lateral quarters (58, 60) such that each of said medial and lateral quarters comprises a ridge (64) formed on its outer surface and a groove (66) registering with said ridge on the inner surface.

7. A method as defined in claim 3, wherein said method comprises thermoforming said ankle portion (44) such that said lateral depression is below said medial depression.

8. A method as defined in any one of claims 1 to 7, wherein heat and pressure are applied simultaneously during the thermoforming step.

9. A method as defined in claim 8, wherein the applied heat is between 121°C and 177°C and the applied pressure is between 517Kpa and 1034Kpa.

10. A method as defined in any one of claims 1 to 9 further comprising securing an outsole (24) to said insole.

11. A method as defined in claim 10 further comprising securing an ice skate blade holder (26) to said outsole.

12. A method as defined in any one of claims 1 to 11, wherein step (b) comprises selecting the pre-cut sheet of thermoformable synthetic material having an uniform thickness.

13. A method as defined in any one of claims 1 to 12, wherein step (c) comprises thermoforming said sheet of thermoformable synthetic material for forming ankle reinforcing elements (68) on outer shell (14) continuously formed in medial side (50), in the rear portion of ankle portion (44) and in the medial side (52).

14. A method as defined in any one of claims 1 to 13, wherein step (b) comprises selecting a pre-cut sheet of thermoformable synthetic material being made of at least first and second layers of different thermoformable synthetic materials.

15. A method as defined in any one of claims 1 to 14, further comprising securing both sides of a toe box (30) to the outer shell (14).

## Patentansprüche

1. Ein Verfahren zur Herstellung eines Schlittschuhs (10) mit Schuhleisten, umfassend ein Obermaterial (12) zum Einschließen eines menschlichen Fußes, wobei der Fuß eine Ferse (H), eine Achillessehne (AT) mit einem hinteren oberen Teil (UP) und einem hinteren unteren Teil (LP) umfasst, der nach außen in Bezug auf den oberen Teil hinausragt, wobei der untere Teil mit der Ferse verschmilzt, wobei der Fuß auch ein Fußgelenk (A) mit einem Innenknöchel und einem Außenknöchel (MM, LM), eine plantare Oberfläche (PS), innere und äußere Seiten (MS, LS) und Zehen (T) umfasst, wobei das Verfahren umfasst:
(a)Bereitstellen einer Form mit einem männlichen Teil und einem weiblichen Teil mit einer dreidimensionalen Form,
(b)Ausrichten und temporäres Sichern von einer vorgestanzten Lage aus wärmeverformbarem synthetischen Material an einem der Teile der Form;
(c)Wärmeverformen der Lage aus wärmeverformbarem synthetischen Material, um ein Stück einer äußeren Schale (14) mit einer dreidimensionalen Form auszubilden, die mit der dreidimensionalen Form des männlichen und weibliche Teils der Form korrespondiert, wobei die äußere Schale (i) eine Fersenkappe (42) zur Aufnahme der Ferse des Fußes umfasst; (ii) einen Fußgelenkbereich (44) zur Aufnahme des Fußgelenkes umfasst; (iii) innere und äußere Viertel (58, 60) zur Aufnahme der jeweiligen inneren und äußeren Seiten des Fußes umfasst, wobei die inneren und äußeren Viertel (58, 60) sich von der Fersenkappe und dem Fußgelenkbereich erstrecken, wobei die inneren und äußeren Viertel (58, 60) jeweilige innere Oberflächen (58IS, 60IS) und äußere Flächen (58OS, 60OS) aufweisen, wobei der Fußgelenkbereich (44) wärmeverformt wird, so dass dieser innere und äußere Seiten (50, 52) umfasst, die dem Innenknöchel und dem Außenknöchel des Fußgelenkes gegenüberliegen, wobei die inneren und äußeren Seiten (50, 52) jeweils innere Flächen (50IS, 52IS) und äußere Flächen (50OS, 52OS), einen hinteren oberen Teil (46) und einen hinteren unteren Teil (48) aufweisen, wobei der hintere untere Teil (48) mit der Fersenkappe (42) verschmilzt, wobei der hintere obere Teil (46) ausgebildet ist, um dem hinteren oberen Teil (UP) der Achillessehne (AT) zu folgen und der hintere untere Teil (48) ausgebildet ist, um dem hinteren unteren Teil (LP) der Achillessehne (AT) zu folgen; und (iv) ein unterer Randabschnitt (76) zum Überlappen eines Bereiches einer Einlegesohle (22) umfasst;
(d)Befestigen einer inneren Verkleidung (16) innerhalb der äußeren Schale (14), um ein Obermaterial (12) auszubilden, welches die innere Verkleidung (16) und die äußere Schale (14) umfasst, wobei die innere Verkleidung (16) weniger steif ist als die äußere Schale (14) und eine Fläche umfasst, die vorgesehen ist, um der Ferse, dem Fußgelenk und den inneren und äußeren Seiten des Fußes bei Verwendung gegenüberzustehen;
(e)Falten der äußeren Schale (14) am hinteren Ende zur Ausbildung eines Hohlraums des Obermaterials (12);
(f) Einführen eines Schuhleistens (78) in den Hohlraum des Obermaterials (12) und Positionieren der Einlegesohle (22) unterhalb des Schuhleistens (78) und innerhalb des unteren Randbereichs (76); und
(g) Befestigen des unteren Randbereich (76) an der Einlegesohle (22);
wobei das Verfahren dadurch charakterisiert ist, dass in Schritt (a) die Form mit männlichen und weiblichen Teilen bereitgestellt wird, wobei jede eine dreidimensionale Form aufweist, welche herausragt und mit der Form der gesamten Ferse (H), Achillessehne (AT) mit hinterem oberen Teil (UP) und hinterem unteren Teil (LP), Fußgelenk (A) mit Innen- und Außenknöchel (MM, LM) und innerer und äußerer Seite (MS, LS) des menschlichen Fußes korrespondiert, so dass in Schritt (e) die äußere Schale (14) gefaltet wird, um den Hohlraum des Obermaterials (12) auszubilden und in Schritt (c) die Lage von wärmeverformbarem synthetischen Material wärmeverformt wird, so dass der hintere untere Teil (48) nach außen in Bezug auf den hinteren oberen Teil (46) hervorsteht.

2. Verfahren gemäß Anspruch 1, wobei das Verfahren die Wärmeverformung der Fersenkappe (42) umfasst, so dass diese im Wesentlichen topfförmig zum Verfolgen der Kontur der Ferse des Fußes ist.

3. Verfahren gemäß Anspruch 1 oder 2, wobei das Verfahren das Wärmeverformen des Fußgelenkbereichs (44) umfasst, so dass es eine seitliche Vertiefung (56) zur Aufnahme des Außenknöchels und einer innere Vertiefung (54) zur Aufnahme des Innenknöchels umfasst.

4. Verfahren gemäß einem der Ansprüche 1 bis 3, wobei das Verfahren das Wärmeverformen des Fußgelenkbereichs (44) umfasst, so dass es eine Rippe (70) umfasst, die auf deren äußerer Oberfläche ausgebildet ist, und eine Nut (72) umfasst, die in die Rippe auf der inneren Oberfläche einrastet.

5. Verfahren gemäß einem der Ansprüche 1 bis 4, wobei das Verfahren ein Wärmeverformen der Fersenkuppe (42) umfasst, so dass es eine Rippe umfasst, die auf deren äußerer Oberfläche ausgebildet ist, und eine Nut umfasst, die in die Rippe auf der inneren Oberfläche einrastet.

6. Verfahren gemäß einem der Ansprüche 1 bis 5, wobei das Verfahren eine Wärmeverformung der inneren und äußeren Viertel (58, 60) umfasst, so dass jedes der inneren und äußeren Viertel einen Rippe (64) umfasst, die auf deren äußeren Oberfläche ausgebildet ist, und eine Nut (66) umfasst, die in die Rippe auf der inneren Oberfläche einrastet.

7. Verfahren gemäß Anspruch 3, wobei das Verfahren ein Wärmeverformen des Fußgelenkbereichs (44) umfasst, so dass die äußere Vertiefung unterhalb der inneren Vertiefung ist.

8. Verfahren gemäß einem der Ansprüche 1 bis 7, wobei Wärme und Druck gleichzeitig während des Wärmeverformungsschrittes angewendet werden.

9. Verfahren gemäß Anspruch 8, wobei die angewendete Wärme zwischen 121 °C und 177°C beträgt und der angewendete Druck zwischen 517Kpa und 1034Kpa beträgt.

10. Verfahren gemäß einem der Ansprüche 1 bis 9, des Weiteren das Befestigen einer Außensohle (24) an der Innensohle umfassend.

11. Verfahren gemäß Anspruch 10, des Weiteren das Befestigen eines Halters (26) für ein Schlittschuhblatt an der Außensohle umfassend.

12. Verfahren gemäß einem der Ansprüche 1 bis 11, wobei Schritt (b) das Auswählen der vorgestanzten Lage von wärmeverformbarem synthetischen Material umfasst, das eine einheitliche Dicke aufweist.

13. Verfahren gemäß einem der Ansprüche 1 bis 12, wobei Schritt (c) ein Wärmeverformen der Lage des wärmeverformbaren synthetischen Materials zum Ausbilden eines Elementes (68) zur Unterstützung des Fußgelenkes auf der äußeren Schale (14) umfasst, das kontinuierlich in der inneren Seite (50), in dem hinteren Bereich des Fußgelenkbereichs (44) und in der inneren Seite (52) ausgebildet wird.

14. Verfahren gemäß einem der Ansprüche 1 bis 13, wobei Schritt (b) das Auswählen einer vorgestanzten Lage von wärmeverformbarem synthetischen Material umfasst, das aus mindestens einer ersten und zweiten Lage von unterschiedlich wärmeverformbarem synthetischen Material hergestellt ist.

15. Verfahren gemäß einem der Ansprüche 1 bis 14, des Weiteren das Befestigen von beiden Seiten einer Zehenbox (30) an der äußeren Schale (14) umfassend.

## Revendications

1. Procédé de fabrication d'une chaussure de patin formée (10) comprenant une tige (12) pour enfermer un pied humain, le pied comportant un talon (H), un tendon d'Achille (AT) comportant une partie supérieure arrière (UP) et une partie inférieure arrière (LP) qui fait saillie vers l'extérieur par rapport à la partie supérieure, la partie inférieure fusionnant avec le talon, le pied comprenant en outre une cheville (A) avec une malléole médiale et une malléole latérale (MM, LM), une surface plantaire (PS), des côtés médial et latéral (MS, LS) et des orteils (T), ledit procédé comprenant :
(a) la fourniture d'un moule avec une partie mâle et une partie femelle, présentant une forme tridimensionnelle ;
(b) l'alignement et la fixation temporaire à une des parties du moule d'une feuille prédécoupée de matériau synthétique thermoformable ;
(c) le thermoformage de ladite feuille de matériau synthétique thermoformable pour former une coque extérieure monobloc (14) présentant une forme tridimensionnelle correspondant à la forme tridimensionnelle des parties mâle et femelle du moule, ladite coque extérieure comprenant (i) un contrefort de talon (42) pour recevoir le talon du pied ; (ii) une partie de cheville (44) pour recevoir la cheville ; (iii) des quartiers médial et latéral (58, 60) pour recevoir les côtés médial et latéral du pied respectivement, lesdits quartiers médial et latéral (58, 60) s'étendant vers l'avant à partir dudit contrefort de talon et de ladite partie de cheville, lesdits quartiers médial et latéral (58, 60) comportant des surfaces intérieures (58IS, 60IS) et des surfaces extérieures (58OS, 60OS) respectives ; dans lequel ladite partie de cheville (44) est thermoformée de sorte qu'elle comprenne des côtés médial et latéral (50, 52) faisant face à la malléole médiale et à la malléole latérale de la cheville, lesdits côtés médial et latéral (50, 52) comportant des surfaces intérieures (50IS, 52IS) et des surfaces extérieures (50OS, 52OS) respectives, une partie supérieure arrière (46) et une partie inférieure arrière (48), ladite partie inférieure arrière (48) fusionnant avec ledit contrefort de talon (42), ladite partie supérieure arrière (46) étant formée pour suivre la partie supérieure arrière (UP) du tendon d'Achille (AT) et ladite partie inférieure arrière (48) étant formée pour suivre la partie inférieure arrière (LP) du tendon d'Achille (AT) ; et (iv) une partie de jupe inférieure (76) pour chevaucher une partie d'une semelle première (22) ;
(d) le montage d'une doublure intérieure (16) à l'intérieur de ladite coque extérieure (14) pour former une tige (12) comprenant ladite doublure intérieure (16) et ladite coque extérieure (14), ladite doublure intérieure (16) étant moins rigide que ladite coque extérieure (14) et comprenant une surface prévue pour faire face au talon, à la cheville et aux côtés médial et latéral du pied durant l'utilisation ;
(e) le pliage de ladite coque extérieure (14) à l'arrière pour former une cavité de la tige (12) ;
(f) l'insertion d'une forme (78) dans la cavité de la tige (12) et le positionnement de ladite semelle première (22) sous la forme (78) et à l'intérieur de ladite partie de jupe inférieure (76) ; et
(g) la fixation de ladite partie de jupe inférieure (76) à ladite semelle première (22) ; le procédé étant **caractérisé en ce que**, dans l'étape (a), le moule est pourvu de parties mâle et femelle, chacune présentant une forme tridimensionnelle qui est protubérante et correspond à la forme du talon (H), du tendon d'Achille (AT) avec la partie supérieure arrière (UP) et la partie inférieure arrière (LP), de la cheville (A) avec les malléoles médiale et latérale (MM, LM) et des côtés médial et latéral (MS, LS) entiers du pied humain, de sorte que, dans l'étape (e), ladite coque extérieure (14) est pliée pour former la cavité de la tige (12) et, dans l'étape (c), la feuille de matériau synthétique thermoformable est thermoformée pour comporter la partie inférieure arrière (48) faisant saillie vers l'extérieur par rapport à ladite partie supérieure arrière (46).

2. Procédé selon la revendication 1, dans lequel ledit procédé comprend le thermoformage dudit contrefort de talon (42) de sorte qu'il présente sensiblement une forme de coupe pour suivre le contour du talon du pied.

3. Procédé selon la revendication 1 ou 2, dans lequel ledit procédé comprend le thermoformage de ladite partie de cheville (44) de sorte qu'elle comprenne un creux latéral (56) pour recevoir la malléole latérale et un creux médial (54) pour recevoir la malléole médiale.

4. Procédé selon une quelconque des revendications 1 à 3, dans lequel ledit procédé comprend le thermoformage de ladite partie de cheville (44) de sorte qu'elle comprenne une saillie (70) formée sur sa surface extérieure et une rainure (72) coïncidant avec ladite saillie sur la surface intérieure.

5. Procédé selon une quelconque des revendications 1 à 4, dans lequel ledit procédé comprend le thermoformage dudit contrefort de talon (42) de sorte qu'il comprenne une saillie formée sur sa surface extérieure et une rainure coïncidant avec ladite saillie sur la surface intérieure.

6. Procédé selon une quelconque des revendications 1 à 5, dans lequel ledit procédé comprend le thermoformage desdits quartiers médial et latéral (58, 60) de sorte que chacun desdits quartiers médial et latéral comprenne une saillie (64) formée sur sa surface extérieure et une rainure (66) coïncidant avec ladite saillie sur la surface intérieure.

7. Procédé selon la revendication 3, dans lequel ledit procédé comprend le thermoformage de ladite partie de cheville (44) de sorte que ledit creux latéral soit en dessous dudit creux médial.

8. Procédé selon une quelconque des revendications 1 à 7, dans lequel de la chaleur et une pression sont appliquées simultanément durant l'étape de thermoformage.

9. Procédé selon la revendication 8, dans lequel la chaleur appliquée est entre 121 °C et 177 °C et la pression appliquée est entre 517 Kpa et 1034 Kpa.

10. Procédé selon une quelconque des revendications 1 à 9, comprenant en outre la fixation d'une semelle seconde (24) à ladite semelle première.

11. Procédé selon la revendication 10, comprenant en outre la fixation d'un porte-lame de patin à glace (26) à ladite semelle seconde.

12. Procédé selon une quelconque des revendications 1 à 11, dans lequel l'étape (b) comprend la sélection de la feuille prédécoupée de matériau synthétique thermoformable possédant une épaisseur uniforme.

13. Procédé selon une quelconque des revendications 1 à 12, dans lequel l'étape (c) comprend le thermoformage de ladite feuille de matériau synthétique thermoformable pour former des éléments de renforcement de cheville (68) sur la coque extérieure (14) formés en continu dans un côté médial (50), dans la partie arrière de la partie de cheville (44) et dans le côté médial (52).

14. Procédé selon une quelconque des revendications 1 à 13, dans lequel l'étape (b) comprend la sélection d'une feuille prédécoupée de matériau synthétique thermoformable, faite d'au moins première et seconde couches de différents matériaux synthétiques thermoformables.

15. Procédé selon une quelconque des revendications 1 à 14, comprenant en outre la fixation de deux côtés d'un renfort de pointe (30) à la coque extérieure (14).
